# EUROPEAN PATENT APPLICATION

(11) **EP 4 572 448 A1**
(43) Date of publication of application: **18.06.2025**
(21) Application number: 24215902.8
(22) Date of filing: 27.11.2024
(51) Int. Cl.: H04W 64/00, G01S 5/00, G01S 5/02, H04W 4/08, H04W 4/40, H04W 8/24

(54) **POSITIONING**

(30) Priority: 12.12.2023 GB 202318895
(71) Applicant: Nokia Technologies Oy, 02610 Espoo (FI)
(72) Inventor: KESHAVAMURTHY, Prajwal, 81241 Munich (DE); SAILY, Mikko, 07150 Laukkoski (FI); SAHIN, Taylan, 81739 Munich (DE); MISHRA, Shashwat, 91120 Palaiseau (FR); CHEN, Chung Shue, 92330 Sceaux (FR)
(74) Representative: Bryers Intellectual Property Ltd

(57) **Abstract**

Certain examples provide first User Equipment, UE, (110_1) comprising: means (11) for receiving, from a network node (140), information indicative of: i) a request (202) to determine information indicative of a position (P110_2) of a second UE (110_2) based at least in part on a set of one or more characteristics (C110_2) of the second UE, wherein each characteristic of the set is a non-unique characteristic that more than one UE can have, and ii) the set of one or more characteristics of the second UE; means (11) for determining a set of one or more characteristics (C110_i) of a UE (110_i), wherein the determination is performed based at least in part on the received information; means for performing a comparison of: the determined set of one or more characteristics of the UE, with the received set of one or more characteristics of the second UE; means (11) for determining a position of the UE, wherein the determination of the position is performed based at least in part on the comparison; and means (11) for sending, to the network node, information indicative of the position of the second UE, wherein the position of the second UE is defined as the position of the UE.

## Description

### TECHNOLOGICAL FIELD

Examples of the disclosure relate to positioning, in particular apparatuses, methods, computer programs and a system for determining a position of a User Equipment, UE.

### BACKGROUND

Conventional positioning procedures are not always optimal. In some circumstances it can be desirable to improve an accuracy of positioning a UE of a radio telecommunication network such as a Radio Access Network, RAN.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

According to various, but not necessarily all, examples of the disclosure there are provided examples as claimed in the appended claims. Any examples and features described in this specification that do not fall under the scope of the independent claims are to be interpreted as examples useful for understanding various embodiments of the invention.

According to at least some examples of the disclosure there is provided a first User Equipment, UE, comprising:
means for receiving, from a network node, information indicative of:
   a request to determine information indicative of a position of a second UE based at least in part on a set of one or more characteristics of the second UE, wherein each characteristic of the set is a non-unique characteristic that more than one UE can have, and
   the set of one or more characteristics of the second UE;
means for determining a set of one or more characteristics of a UE, wherein the determination is performed based at least in part on the received information;
means for performing a comparison of:
   the determined set of one or more characteristics of the UE, with
   the received set of one or more characteristics of the second UE;
means for determining a position of the UE, wherein the determination of the position is performed based at least in part on the comparison; and
means for sending, to the network node, information indicative of the position of the second UE, wherein the position of the second UE is defined as the position of the UE.

According to various, but not necessarily all, examples of the disclosure there is provided a method comprising:
receiving, at a first User Equipment, UE, from a network node, information indicative of:
   a request to determine information indicative of a position of a second UE based at least in part on a set of one or more characteristics of the second UE, wherein each characteristic of the set is a non-unique characteristic that more than one UE can have, and
   the set of one or more characteristics of the second UE;
determining a set of one or more characteristics of a UE, wherein the determination is performed based at least in part on the received information;
performing a comparison of:
   the determined set of one or more characteristics of the UE, with
   the received set of one or more characteristics of the second UE;
determining a position of the UE, wherein the determination of the position is performed based at least in part on the comparison; and
sending, to the network node, information indicative of the position of the second UE, wherein the position of the second UE is defined as the position of the UE.

According to various, but not necessarily all, examples of the disclosure there is provided a chipset comprising processing circuitry configured to perform the above-mentioned method.

According to various, but not necessarily all, examples of the disclosure there is provided a module, circuitry, device and/or system comprising means for performing the above-mentioned method.

According to various, but not necessarily all, examples of the disclosure there is provided a computer program comprising instructions, which when executed by a first User Equipment, UE, cause the first UE to perform:
receiving, from a network node, information indicative of:
   a request to determine information indicative of a position of a second UE based at least in part on a set of one or more characteristics of the second UE, wherein each characteristic of the set is a non-unique characteristic that more than one UE can have, and
   the set of one or more characteristics of the second UE;
determining a set of one or more characteristics of a UE, wherein the determination is performed based at least in part on the received information;
performing a comparison of:
   the determined set of one or more characteristics of the UE, with
   the received set of one or more characteristics of the second UE;
determining a position of the UE, wherein the determination of the position is performed based at least in part on the comparison; and
sending, to the network node, information indicative of the position of the second UE, wherein the position of the second UE is defined as the position of the UE.

According to various, but not necessarily all, examples of the disclosure there is provided a first User Equipment, UE, comprising:
at least one processor; and
at least one memory storing instructions that, when executed by the at least one processor, cause the first UE at least to:
   receive, from a network node, information indicative of:
      a request to determine information indicative of a position of a second UE based at least in part on a set of one or more characteristics of the second UE, wherein each characteristic of the set is a non-unique characteristic that more than one UE can have, and
      the set of one or more characteristics of the second UE;
   determine a set of one or more characteristics of a UE, wherein the determination is performed based at least in part on the received information;
   perform a comparison of:
      the determined set of one or more characteristics of the UE, with
      the received set of one or more characteristics of the second UE;
   determine a position of the UE, wherein the determination of the position is performed based at least in part on the comparison; and
   send, to the network node, information indicative of the position of the second UE, wherein the position of the second UE is defined as the position of the UE.

According to various, but not necessarily all, examples of the disclosure there is provided a non-transitory computer readable medium encoded with instructions that, when executed by at least one processor of a first User Equipment, UE, causes at least the following to be performed:
receive, from a network node, information indicative of:
   a request to determine information indicative of a position of a second UE based at least in part on a set of one or more characteristics of the second UE, wherein each characteristic of the set is a non-unique characteristic that more than one UE can have, and
   the set of one or more characteristics of the second UE;
determine a set of one or more characteristics of a UE, wherein the determination is performed based at least in part on the received information;
perform a comparison of:
   the determined set of one or more characteristics of the UE, with
   the received set of one or more characteristics of the second UE;
determine a position of the UE, wherein the determination of the position is performed based at least in part on the comparison; and
send, to the network node, information indicative of the position of the second UE, wherein the position of the second UE is defined as the position of the UE.

The following portion of this 'Brief Summary' section describes various features that can be features of any of the examples described in the foregoing portion of the 'Brief Summary' section mutatis mutandis. The description of a function should additionally be considered to also disclose any means suitable for performing that function, or any instructions stored in at least one memory that, when executed by at least one processor, cause an apparatus to perform that function.

In some but not necessarily all examples, the first UE is at least one of the following: a Position Reference Unit, PRU;
a UE comprising means for sensing one or more characteristics of other UE; or
a UE comprising means for evaluating a position of other UE.

In some but not necessarily all examples, the network node is at least one of the following: a positioning server;
a Location Management Function, LMF; or
a UE.

In some but not necessarily all examples, determining the position of the UE is performed based on whether the determined set of one or more characteristics of the UE differs from the received set of one or more characteristics of the second UE by less than a threshold amount.

In some but not necessarily all examples, determining the position of the UE comprises at least one of the following:
determining the position of the UE using one or more sensors of the first UE;
   determining an absolute position of the UE;
determining a position of the UE relative to the first UE;
   determining a position of the first UE;
determining a distance and/or a direction of the UE from the first UE;
determining the position of the UE relative to a reference location;
determining a distance and/or a direction of the UE from a reference location; and
   determining an indication of a level of accuracy of the position of the UE.

In some but not necessarily all examples, the received request comprises an indication of a geographic region, and wherein the first UE determines the set of one or more characteristics for one or more UE that are in the geographic region.

In some but not necessarily all examples, the received request comprises an indication of a reference position, and wherein the position of the UE is determined relative to the reference position.

In some but not necessarily all examples, the one or more characteristics characterise at least one of the following:
a mobility status,
a coarse location,
a location relative to a reference location,
an orientation relative to a reference orientation,
a type of UE,
a transmission beam,
a transmission carrier frequency,
a transmission Bandwidth Part, BWP,
a transmission radio resource,
a transmission data traffic,
an antenna, or
a transmission radio channel.

According to at least some examples of the disclosure, there is provided a network node comprising:
means for receiving, from a second User Equipment, UE, information indicative of:
   a request to determine information indicative of a position of the second UE based at least in part on a set of one or more characteristics of the second UE, wherein
   each characteristic of the set of one or more characteristics is a non-unique characteristic that more than one UE can have, and
   the set of one or more characteristics of the second UE;
means for sending, to a first UE, information indicative of the request and the set of one or more characteristics of the second UE;
means for receiving, from the first UE responsive to sending the request, information indicative of the position of the second UE; and
means for sending, to the second UE, the information indicative of the position of the second UE.

According to various, but not necessarily all, examples of the disclosure there is provided a method comprising:
receiving, at a network node from a second User Equipment, UE, information indicative of:
   a request to determine information indicative of a position of the second UE based at least in part on a set of one or more characteristics of the second UE, wherein
   each characteristic of the set of one or more characteristics is a non-unique characteristic that more than one UE can have, and
   the set of one or more characteristics of the second UE;
sending, to a first UE, information indicative of the request and the set of one or more characteristics of the second UE;
receiving, from the first UE responsive to sending the request, information indicative of the position of the second UE; and
sending, to the second UE, the information indicative of the position of the second UE.

According to various, but not necessarily all, examples of the disclosure there is provided a chipset comprising processing circuitry configured to perform the above-mentioned method.

According to various, but not necessarily all, examples of the disclosure there is provided a module, circuitry, device and/or system comprising means for performing the above-mentioned method.

According to various, but not necessarily all, examples of the disclosure there is provided a computer program comprising instructions, which when executed by a network node, cause the network node to perform:
receiving, from a second User Equipment, UE, information indicative of:
   a request to determine information indicative of a position of the second UE based at least in part on a set of one or more characteristics of the second UE, wherein
   each characteristic of the set of one or more characteristics is a non-unique characteristic that more than one UE can have, and
   the set of one or more characteristics of the second UE;
sending, to a first UE, information indicative of the request and the set of one or more characteristics of the second UE;
receiving, from the first UE responsive to sending the request, information indicative of the position of the second UE; and
sending, to the second UE, the information indicative of the position of the second UE.

According to various, but not necessarily all, examples of the disclosure there is provided a network node comprising:
at least one processor; and
at least one memory storing instructions that, when executed by the at least one processor, cause the apparatus at least to:
   receive, from a second User Equipment, UE, information indicative of:
      a request to determine information indicative of a position of the second UE based at least in part on a set of one or more characteristics of the second UE, wherein
      each characteristic of the set of one or more characteristics is a non-unique characteristic that more than one UE can have, and
      the set of one or more characteristics of the second UE;
   send, to a first UE, information indicative of the request and the set of one or more characteristics of the second UE;
   receive, from the first UE responsive to sending the request, information indicative of the position of the second UE; and
   send, to the second UE, the information indicative of the position of the second UE.

According to various, but not necessarily all, examples of the disclosure there is provided a non-transitory computer readable medium encoded with instructions that, when executed by at least one processor of a network node, causes at least the following to be performed: receive, from a second User Equipment, UE, information indicative of:
a request to determine information indicative of a position of the second UE based at least in part on a set of one or more characteristics of the second UE, wherein each characteristic of the set of one or more characteristics is a non-unique characteristic that more than one UE can have, and
the set of one or more characteristics of the second UE;

send, to a first UE, information indicative of the request and the set of one or more characteristics of the second UE;
receive, from the first UE responsive to sending the request, information indicative of the position of the second UE; and
send, to the second UE, the information indicative of the position of the second UE.

According to at least some examples of the disclosure there is provided a first User Equipment, UE, comprising:
means for receiving, from a network node, information indicative of a request for information indicative of:
   a position of a UE, and
   a set of one or more characteristics of the UE, wherein each characteristic of the set
   is a non-unique characteristic that more than one UE can have;
means for determining, based at least in part on the received information:
   the position of the UE, and
   the set of one or more characteristics of the UE; and
means for sending, to the network node, information indicative of:
   the determined position of the UE; and
   the determined set of one or more characteristics of the UE.

According to various, but not necessarily all, examples of the disclosure there is provided a method comprising:
receiving, at a first User Equipment, UE, from a network node, information indicative of a request for information indicative of:
   a position of a UE, and
   a set of one or more characteristics of the UE, wherein each characteristic of the set
   is a non-unique characteristic that more than one UE can have;
determining, based at least in part on the received information:
   the position of the UE, and
   the set of one or more characteristics of the UE; and
sending, to the network node, information indicative of:
   the determined position of the UE; and
   the determined set of one or more characteristics of the UE.

According to various, but not necessarily all, examples of the disclosure there is provided a chipset comprising processing circuitry configured to perform the above-mentioned method.

According to various, but not necessarily all, examples of the disclosure there is provided a module, circuitry, device and/or system comprising means for performing the above-mentioned method.

According to various, but not necessarily all, examples of the disclosure there is provided a computer program comprising instructions, which when executed by a first User Equipment, UE, cause the first UE to perform:
receiving, from a network node, information indicative of a request for information indicative of:
   a position of a UE, and
   a set of one or more characteristics of the UE, wherein each characteristic of the set
   is a non-unique characteristic that more than one UE can have;
determining, based at least in part on the received information:
   the position of the UE, and
   the set of one or more characteristics of the UE; and
sending, to the network node, information indicative of:
   the determined position of the UE; and
   the determined set of one or more characteristics of the UE.

According to various, but not necessarily all, examples of the disclosure there is provided a first User Equipment, UE, comprising:
at least one processor; and
at least one memory storing instructions that, when executed by the at least one processor, cause the first UE at least to:
   receive, from a network node, information indicative of a request for information indicative of:
      a position of a UE, and
      a set of one or more characteristics of the UE, wherein each characteristic of the set
      is a non-unique characteristic that more than one UE can have;
   determine, based at least in part on the received information:
      the position of the UE, and
      the set of one or more characteristics of the UE; and
   send, to the network node, information indicative of:
      the determined position of the UE; and
      the determined set of one or more characteristics of the UE.

According to various, but not necessarily all, examples of the disclosure there is provided a non-transitory computer readable medium encoded with instructions that, when executed by at least one processor of a first User Equipment, UE, causes at least the following to be performed:
receive, from a network node, information indicative of a request for information indicative of:
   a position of a UE, and
   a set of one or more characteristics of the UE, wherein each characteristic of the set
   is a non-unique characteristic that more than one UE can have;
determine, based at least in part on the received information:
   the position of the UE, and the set of one or more characteristics of the UE; and
send, to the network node, information indicative of:
   the determined position of the UE; and
   the determined set of one or more characteristics of the UE.

According to at least some examples of the disclosure there is provided a second User Equipment, UE, comprising:
means for sending, to a network node, information indicative of a request for information indicative of:
   a position of a UE, and
   a set of one or more characteristics of the UE, wherein each characteristic of the set
   is a non-unique characteristic that more than one UE can have;
means for receiving, from the network node responsive to sending the information,
information indicative of:
   the set of one or more characteristics of the UE, and
   the position of the UE; and
means for determining a position of the second UE based, at least in part on:
   the received set of one or more characteristics of the UE,
   the received position of the UE, and
   a set of one or more characteristics of the UE.

According to various, but not necessarily all, examples of the disclosure there is provided a method comprising:
sending, from a second User Equipment, UE, to a network node, information indicative of a request for information indicative of:
   a position of a UE, and
   a set of one or more characteristics of the UE, wherein each characteristic of the set
   is a non-unique characteristic that more than one UE can have;
receiving, from the network node responsive to sending the information, information indicative of:
   the set of one or more characteristics of the UE, and
   the position of the UE; and
determining a position of the second UE based, at least in part on:
   the received set of one or more characteristics of the UE,
   the received position of the UE, and
   a set of one or more characteristics of the UE.

According to various, but not necessarily all, examples of the disclosure there is provided a chipset comprising processing circuitry configured to perform the above-mentioned method.

According to various, but not necessarily all, examples of the disclosure there is provided a module, circuitry, device and/or system comprising means for performing the above-mentioned method.

According to various, but not necessarily all, examples of the disclosure there is provided a computer program comprising instructions, which when executed by a second User Equipment, UE, cause the second UE to perform:
sending, to a network node, information indicative of a request for information indicative of:
   a position of a UE, and
   a set of one or more characteristics of the UE, wherein each characteristic of the set
   is a non-unique characteristic that more than one UE can have;
receiving, from the network node responsive to sending the information, information indicative of:
   the set of one or more characteristics of the UE, and
   the position of the UE; and
determining a position of the second UE based, at least in part on:
   the received set of one or more characteristics of the UE,
   the received position of the UE, and
   a set of one or more characteristics of the UE.

According to various, but not necessarily all, examples of the disclosure there is provided a second User Equipment, UE, comprising:
at least one processor; and
at least one memory storing instructions that, when executed by the at least one processor, cause the second UE at least to:
   send, to a network node, information indicative of a request for information indicative of:
      a position of a UE, and
      a set of one or more characteristics of the UE, wherein each characteristic of the set
      is a non-unique characteristic that more than one UE can have;
   receive, from the network node responsive to sending the information, information indicative of:
      the set of one or more characteristics of the UE, and
      the position of the UE; and
   determine a position of the second UE based, at least in part on:
      the received set of one or more characteristics of the UE,
      the received position of the UE, and
      a set of one or more characteristics of the UE.

According to various, but not necessarily all, examples of the disclosure there is provided a non-transitory computer readable medium encoded with instructions that, when executed by at least one processor of a second User Equipment, UE, causes at least the following to be performed:
send, to a network node, information indicative of a request for information indicative of:
   a position of a UE, and
   a set of one or more characteristics of the UE, wherein each characteristic of the set is a non-unique characteristic that more than one UE can have;
receive, from the network node responsive to sending the information, information indicative of:
   the set of one or more characteristics of the UE, and
   the position of the UE; and
determine a position of the second UE based, at least in part on:
   the received set of one or more characteristics of the UE,
   the received position of the UE, and
   a set of one or more characteristics of the UE.

According to at least some examples of the disclosure there is provided a network node comprising:
means for receiving, from a second User Equipment, UE, information indicative of:
   a first request to determine information indicative of a position of the second UE based at least in part on a set of one or more characteristics of the second UE,
   wherein each characteristic of the set of one or more characteristics is a non-unique characteristic that more than one UE can have, and
   the set of one or more characteristics of the second UE;
means for sending, to a first UE information indicative of a second request for information indicative of:
   a position of a UE, and
   a set of one or more characteristics of the UE;
means for receiving, from the first UE, information indicative of:
   the position of the UE, and
   the set of one or more characteristics of the UE;
means for determining a position of the second UE based, at least in part on:
   the set of one or more characteristics of the UE,
   the position of the UE, and
   the set of one or more characteristics of the UE;
means for sending, to the second UE, information indicative of the determined position of the second UE.

According to various, but not necessarily all, examples of the disclosure there is provided a method comprising:
receiving, at a network node from a second User Equipment, UE, information indicative of:
   a first request to determine information indicative of a position of the second UE based at least in part on a set of one or more characteristics of the second UE,
   wherein each characteristic of the set of one or more characteristics is a non-unique characteristic that more than one UE can have, and
   the set of one or more characteristics of the second UE;
sending, to a first UE information indicative of a second request for information indicative of:
   a position of a UE, and
   a set of one or more characteristics of the UE;
receiving, from the first UE, information indicative of:
   the position of the UE, and
   the set of one or more characteristics of the UE;
determining a position of the second UE based, at least in part on:
   the set of one or more characteristics of the UE,
   the position of the UE, and
   the set of one or more characteristics of the UE;
sending, to the second UE, information indicative of the determined position of the second UE.

According to various, but not necessarily all, examples of the disclosure there is provided a chipset comprising processing circuitry configured to perform the above-mentioned method.

According to various, but not necessarily all, examples of the disclosure there is provided a module, circuitry, device and/or system comprising means for performing the above-mentioned method.

According to various, but not necessarily all, examples of the disclosure there is provided a computer program comprising instructions, which when executed by a network node, cause the network node to perform:
receiving, from a second User Equipment, UE, information indicative of:
   a first request to determine information indicative of a position of the second UE based at least in part on a set of one or more characteristics of the second UE,
   wherein each characteristic of the set of one or more characteristics is a non-unique characteristic that more than one UE can have, and
   the set of one or more characteristics of the second UE;
sending, to a first UE information indicative of a second request for information indicative of:
   a position of a UE, and
   a set of one or more characteristics of the UE;
receiving, from the first UE, information indicative of:
   the position of the UE, and
   the set of one or more characteristics of the UE;
determining a position of the second UE based, at least in part on:
   the set of one or more characteristics of the UE,
   the position of the UE, and
   the set of one or more characteristics of the UE;
sending, to the second UE, information indicative of the determined position of the second UE.

According to various, but not necessarily all, examples of the disclosure there is provided a network node comprising:
at least one processor; and
at least one memory storing instructions that, when executed by the at least one processor, cause the network node at least to:

receive, from a second User Equipment, UE, information indicative of:
   a first request to determine information indicative of a position of the second UE based at least in part on a set of one or more characteristics of the second UE,
   wherein each characteristic of the set of one or more characteristics is a non-unique characteristic that more than one UE can have, and
   the set of one or more characteristics of the second UE;
send, to a first UE information indicative of a second request for information indicative of:
   a position of a UE, and
   a set of one or more characteristics of the UE;
receive, from the first UE, information indicative of:
   the position of the UE, and
   the set of one or more characteristics of the UE;
determine a position of the second UE based, at least in part on:
   the set of one or more characteristics of the UE,
   the position of the UE, and
   the set of one or more characteristics of the UE;
send, to the second UE, information indicative of the determined position of the second UE.

According to various, but not necessarily all, examples of the disclosure there is provided a non-transitory computer readable medium encoded with instructions that, when executed by at least one processor, causes at least the following to be performed:
... [Computer program claim with preferred form of claim wording for the US]

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION OF THE DRAWINGS

Some examples will now be described with reference to the accompanying drawings in which:
FIG. 1 schematically illustrates an example of a radio telecommunications network;
FIG. 2 schematically illustrates an example of a method in accordance with the subject matter described herein;
FIG. 3 schematically illustrates a further example of a method in accordance with the subject matter described herein;
FIG. 4 schematically illustrates a yet further example of a method in accordance with the subject matter described herein;
FIG. 5 schematically illustrates a yet further example of a method in accordance with the subject matter described herein;
FIG. 6 schematically illustrates a yet further example of a method in accordance with the subject matter described herein;
FIG. 7 schematically illustrates an example of an apparatus in accordance with the subject matter described herein; and
Fig. 8 schematically illustrates a computer program in accordance with the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### ABBREVIATIONS/DEFINITIONS

- 3GPP: 3rd Generation Partnership Project
- AI: Artificial Intelligence
- CBR: Channel Busy Ratio
- CQI: Channel Quality Indicator
- DL: Downlink
- ID: Identifier
- GT: Ground Truth
- IIoT: Industrial Internet of Things
- LMF: Location Management Function
- LPP: LTE Positioning Protocol
- LOS: Line of Sight
- ML: Machine Learning
- NR: New Radio
- NLOS: Non LOS
- PRS: Positioning Reference Signal
- PRU: Positioning Reference Unit
- RAN: Radio Access Network
- SL: Sidelink
- Pos: Positioning
- TDOA: Time Difference of Arrival
- TRP: Transmit Receive Point
- V2X: Vehicle-to-anything
- VRU: Vulnerable Roadside User
- UE: User Equipment
- UL: Uplink

### DETAILED DESCRIPTION

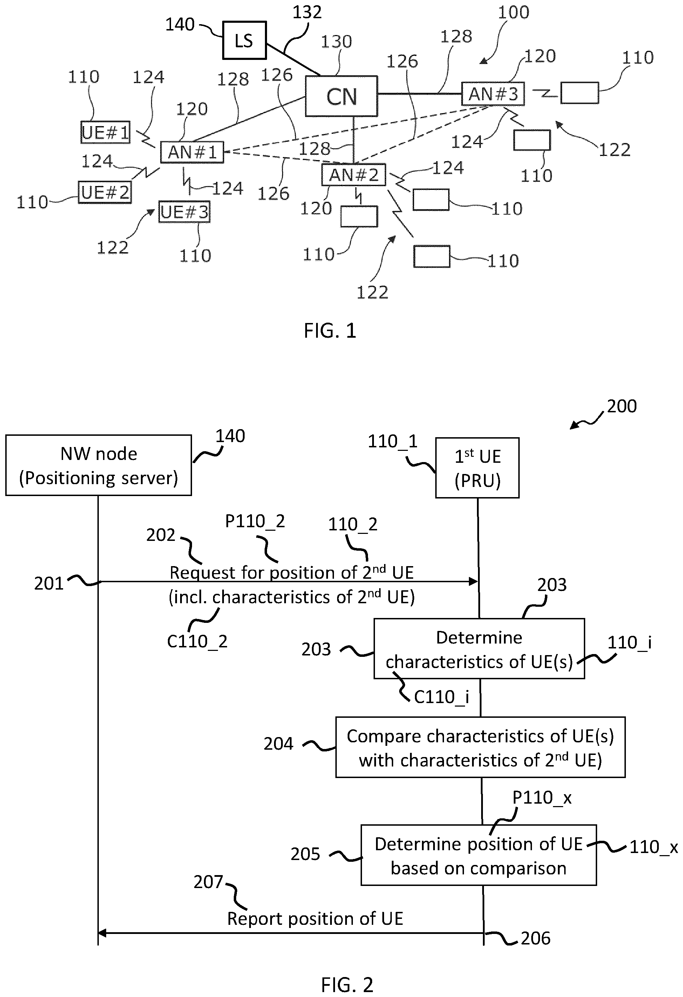

FIG. 1 schematically illustrates an example of a network 100 suitable for use with examples of the present disclosure. The network (also referred to as NW) comprises a plurality of network nodes including: terminal nodes 110 (also referred to as User Equipment, UE), access nodes 120 (also referred to as Radio Access Network, RAN, node, or Base Station, BS), one or more location servers 140, and one or more core network nodes 130. The terminal nodes 110 and access nodes 120 communicate with each other. The access nodes 120 may communicate with the location server 140 via the one or more core nodes 130. The access nodes 120 and one or more location servers 140 may communicate directly with each other. The one or more core network nodes 130 may, in some but not necessarily all examples, communicate with each other. The one or more access nodes 120 may, in some but not necessarily all examples, communicate with each other.

The network 100 is, in this example, a radio telecommunications network, i.e. a RAN, in which at least some of the terminal nodes 110 and access nodes 120 communicate with each other using transmission/reception of radio waves.

The network/RAN 100 may be a cellular network comprising a plurality of cells 122 each served by an access node 120. The access nodes 120 comprise cellular radio transceivers. The terminal nodes 110 comprise cellular radio transceivers.

In the particular example illustrated and discussed below, the network 100 is a New Radio, NR, network of the Third Generation Partnership Project, 3GPP, and its fifth generation, 5G, technology. In other examples, the network 100 may be a network beyond 5G, for example a next generation (i.e. sixth generation, 6G) Radio Network that is currently under development (i.e. an evolution of the NR network and its 5G technology).

The interfaces between the terminal nodes 110 and the access nodes 120 are radio interfaces 124 (e.g., Uu interfaces). The interfaces between the access nodes 120 and one or more core nodes 130 are backhaul interfaces 128 (e.g., S1 and/or Next Generation, NG, interfaces). The interfaces between the one or more location servers 140 and the one or more core nodes 130 are backhaul interface 132 (e.g., NLs interface).

Depending on the exact deployment scenario, the access nodes 120 may be RAN nodes such as NG-RAN nodes. NG-RAN nodes may be gNodeBs, gNBs, that provide NG user plane and control plane protocol terminations towards the UE. The gNBs connected by means of NG interfaces to a 5G Core (5GC), more specifically to an Access and Mobility Management Function, AMF, by means of an NG Control Plane, NG-C, interface and to a User Plane Function, UPF, by means of an NG User Plane, NG-U, interface. The access nodes 120 may be interconnected with each other by means of Xn interfaces 126.

The cellular network 100 may be configured to operate in licensed frequency bands, or unlicensed frequency bands (not least such as: unlicensed bands that rely upon a transmitting device to sense the radio resources/medium before commencing transmission, such as via a Listen Before Talk, LBT, procedure; and a 60GHz unlicensed band where beamforming may be required in order to achieve required coverage).

The access nodes 120 may be deployed in an NG standalone operation/scenario. The access nodes 120 may be deployed in a NG non-standalone operation/scenario. The access nodes 120 may be deployed in a Carrier Aggregation, CA, operation/scenario. The access nodes 120 may be deployed in a Dual Connectivity, DC, operation/scenario, i.e., Multi Radio Access Technology - Dual Connectivity, MR-DC, or NR-DC. The access nodes 120 may be deployed in a Multi Connectivity, MC, operation/scenario.

In such non-standalone/dual connectivity deployments, the access nodes 120 may be interconnected to each other by means of X2 or Xn interfaces, and connected to an Evolved Packet Core, EPC, by means of an S1 interface or to the 5GC by means of a NG interface.

The access nodes 120 are network elements in the network responsible for radio transmission and reception in one or more cells 122 to or from the terminal nodes 110. The access nodes 120 are the network termination of a radio link. Each access node may host one or more Transmission Reception Points, TRPs.

An access node 120 may be implemented as a single network equipment, or have a split architecture that is disaggregated/distributed over two or more RAN nodes, such as a Central Unit, CU, a Distributed Unit, DU, a Remote Radio Head-end, RRH, using different functional-split architectures and different interfaces.

The terminal nodes 110 are network elements in the network that terminate the user side of the radio link. They are devices allowing access to network services. Terminal node 110 functionalities may be performed also by Mobile Termination, MT, part of an Integrated Access and Backhaul, IAB, node. The terminal nodes 110 may be referred to as User Equipment, UE, mobile terminals or mobile stations.

The term 'User Equipment' may be used to designate mobile equipment comprising means, such as a smart card, for authentication/encryption etc. such as a Subscriber Identity Module, SIM. A SIM/SIM card can be a memory chip, a module, or a Universal Subscriber Identity Module (USIM). In some examples, the term 'User Equipment' can be used to designate a location/position tag, a hyper/smart, a hyper/smart sensor, or a mobile equipment comprising circuitry embedded as part of the user equipment for authentication/encryption such as a software SIM.

The location server 140 is a device that manages the support of different location services for UEs, including positioning of UEs and delivery of assistance data to UEs. The location server can be connected to the core node and the Internet. The location server can be implemented as one or more servers. The location server is configured to support one or more location services for UEs 110 that can connect to the location server 140 via the core network 130 and/or via the Internet. The location server may be referred to as Location Management Function, LMF. Where the location server resides in a RAN node, it may be referred to as a Location Management Component, LMC. The location server may interact with a serving RAN node for a UE in order to obtain position measurements for the UE, including uplink measurements made by a RAN node and downlink measurements made by the UE. As will be discussed in further detail below, the location server may interact with one or more UEs, each of which themselves is able to determine a position of one or more other UEs, in order to obtain position(s) of other UE(s).

In the following description:
a terminal node may be referred to simply as a UE;
a location server may be referred to simply as a positioning server;
an access node or a RAN node or may be referred to simply as gNB; a node of the network (not least such as a positioning server, a UE, or a gNB) may be referred to simply as network node); and
a UE, whose position is to be determined, may be referred to simply as a target UE.

There now follows a brief discussion of positioning in a radio telecommunications network, e.g. a RAN.

The position of a target UE within a RAN can be determined by a positioning server by various conventional network-based positioning techniques (such as using LTE Positioning Protocol, LPP, or New Radio Positioning Protocol, NRPP). Conventional techniques may involve the exchange, over a Uu interface in the NR spectra, of RSs (e.g., transmitting Orthogonal Frequency-Division Multiplexing, OFDM, Positioning Reference Signals, PRSs, from a RAN node to the target UE for DL positioning; and transmitting OFDM-SRSs from the target UE to a RAN node for UL positioning). Such Reference Signals, RSs, are received, detected and measured by the gNBs (for UL positioning) or the UE (for DL positioning). The positioning server, receives the measurements from the gNBs or the UE. Such measurement information is received by the positioning server via an Access and Mobility Management Function, AMF, over a backhaul interface (e.g., NLs interface). The positioning server then uses such received measurement information to compute the position of the UE. A NR Positioning Protocol A, NRPPa, carries positioning information between the NG-RAN nodes and the positioning server over a NG control plane interface (e.g., NG-C interface).

Such Radio Access Technology, RAT, based positioning techniques may utilise one of the following methods: Uplink Angle of Arrival (UL-AoA), Downlink Angle of Departure (DL-AoD), Variance of Time of Arrival (TOA)-based ranging, Uplink Time Difference of Arrival (UL-TDOA), Downlink Time Difference of Arrival (DL-TDOA), and Multi-cell Round Trip Time (Multi-RTT).

The 5G NR localization process is standardized in the 5G NR LPP specification. A conventional positioning session relies on a receiver measuring positioning RSs (PRS in DL, and SRS in UL) which are scheduled by the network on specific time-frequency-space-code resources. The allocation of resources for such transmissions is coordinated across multiple UEs and gNBs via LPP and NRPPa interfaces, so that the RSs are ensured to be unique and interference free. This is done to enable the receiver (UE in DL and gNB in UL) to determine/compute/extract positioning measurements which are reported back to the network (in case of UE-assisted positioning) or used locally (for UE-based positioning) to compute the UE location.

A target UE can be positioned by such above-mentioned conventional positioning techniques - referred to as NR Uu-based positioning. A target UE can be also be positioned by positioning techniques such as NR Sidelink, SL, based positioning and also Artificial Intelligence/Machine Learning, AI/ML, based (or assisted) positioning, or any hybrid method.

There now follows a brief discussion of AI/ML-based, or assisted, positioning.

AI/ML-based, or assisted, positioning may comprise:
Direct AI/ML positioning, wherein an AI/ML model's output is a UE's location. This could involve, for example, fingerprinting based on channel observations as an input of the AI/ML model.
AI/ML assisted positioning, wherein an AI/ML model's output is a new measurement and/or enhancement of an existing measurement, for example, Line of Sight, LoS, or Non Line of Sight, NLOS, identification, timing and/or angle of measurement, as well as likelihood of measurement.

Certain use cases for AI/ML-based, or assisted, positioning include:
Case 1: UE-based positioning with a UE-side model for direct AI/ML or AI/ML assisted positioning.
Case 2a: UE-assisted/LMF-based positioning with a UE-side model for AI/ML assisted positioning.
Case 2b: UE-assisted/LMF-based positioning with a LMF-side model for direct AI/ML positioning
Case 3a: NG-RAN node assisted positioning with gNB-side model for AI/ML assisted positioning
Case 3b: NG-RAN node assisted positioning with a LMF-side model for direct AI/ML positioning

There now follows a brief discussion of positioning requirements.

There is a demand for increasingly accurate positioning. Various use cases of positioning information (not least for example Vehicle-to-anything, V2X, and Industrial Internet of Things, IIOT) have particular positioning requirements, not least in terms of accuracy and latency.

For instance, 3GPP TS22.104 sets out positioning requirements for IIoT use cases in out-of-coverage scenarios. 3GPP TS22.261 sets out positioning requirements for ranging based services. In Table 7.3.2.2-1 of TS22.261, it lists performance requirements for different positioning service levels. Along with horizontal and vertical accuracy requirements, there are also requirements on positioning service availability. Also, positioning service latency are particularly stringent for positioning service levels 4 (99,9% availability and 15ms latency) and 6 (99,9% availability and 10ms latency). Examples of scenarios / use cases of positioning service levels 4 and 6 include:
- V2X, set-2 and set-3 use cases [TR 38.845]: This corresponds to, in RP-210040, 'Group 2: Lane level positioning requirement' use cases such as vehicle platooning, cooperative lane merge, lane change warning, emergency break warning, intersection movement assist, etc., and 'Group 3: Below meter positioning requirement' use cases such as high definition sensor sharing, vulnerable road user (VUR) - collision risk warning, cooperative manoeuvres in emergency situations, real-time situation awareness and high-definition maps, etc.
- IIoT [TS 22.104]: Factories of the Future scenarios such as augmented reality in smart factories, mobile control panels with safety functions in smart factories (within factory danger zones), inbound logistics for manufacturing (for driving trajectories (if supported by further sensors like camera, GNSS, IMU) of indoor autonomous driving systems)).

There now follows a brief discussion of positioning performance monitoring and AI/ML model or functionality performance monitoring (and training) in AI/ML-based positioning.

Given the high accuracy, and latency, requirements of positioning use cases, positioning performance may need to be monitored so that any performance degradation can be identified in a timely manner and so that corrective measures can be taken to ensure the required positioning accuracy performance and positioning integrity (not least such as, where an AI/ML model is used in the positioning procedure, further training of the AI/ML model).

In this regard, a positioning Ground Truth, GT, (e.g. a 'true' location of a target UE, or an accurate position estimate of a target UE that is labelled as a GT and which may be associated with an indication of a quality of the label, i.e. a level of confidence in its value) is needed for a performance monitoring operation. For AI/ML based or assisted positioning, such performance monitoring may be referred as AI/ML model or functionality performance monitoring in AI/ML-based positioning. Also, the performance monitoring may be used in performing a positioning integrity evaluation (e.g. to evaluate a reliability of the positioning estimate).

There now follows a brief discussion of Positioning Reference Units, PRUs.

A source for positioning GT in RAT-dependent positioning methods is a Positioning Reference Unit, PRU. A PRU is considered to be aware of its absolute location and is able to report its location. A PRU can be used to generate GT for positioning and also for target UEs. For the purposes of the present disclosure, UEs that are aware of their absolute position are referred as PRUs. PRUs, and various of their conventional capabilities, are discussed in section 5.4.5 of 3GPP TS 38.305 (v.17.6.9).

However, a conventional PRU knows only its own location and not the location of a target UE. Hence, it is challenging to get a position estimate or positioning GT for a target UE using a conventional PRU since the PRU may not: be located in very close proximity to the target UE; have LoS to the target UE; and/or have a fixed distance/angle from the target UE.

Also, even if a conventional PRU were aware of a target UE's radio identity, the PRU may not be able to identify the target UE in a physical world to identify and compute a positioning GT for it.

Thus there are challenges in determining a position of a target UE using a PRU, and hence (since such a position can be used as/to generate a positioning GT for a target UE), there are challenges in generating a positioning GT for a target UE for positioning performance monitoring purposes.

Various examples of the disclosure seek to provide improved positioning of a UE. Various examples of the disclosure seek to improve UE positioning accuracy using PRU-based sensing, i.e. using a PRU with sensing capability that can sense a UE as well as characteristics of the UE and determine a position of the sensed UE (e.g. determine a range - distance and/or angle - to the UE). Various, but not necessarily all, examples of the disclosure seek to enable determination/generation of a positioning GT for a UE, which may be used for monitoring a performance of a procedure for positioning the UE, not least such as AI/ML-based positioning of the UE.

FIG. 2 schematically illustrates a method 200 for determining a position of a (second) target UE 110_2 (not shown) according to an example of the subject matter described herein. The method shows signaling between a network node, e.g. a positioning server 140, and a first UE 110_1, e.g. a PRU.

FIG. 2 can be considered to illustrate a plurality of methods, in the sense that FIG. 2 can be considered to illustrate one or more actions performed by/at a plurality of actors/entities (e.g. apparatuses such as the first UE 110_1 or the NW node 140). FIG. 2 can therefore be considered to illustrate a plurality of individual methods performed by each respective individual actor/entity of the plurality of the actors/entities.

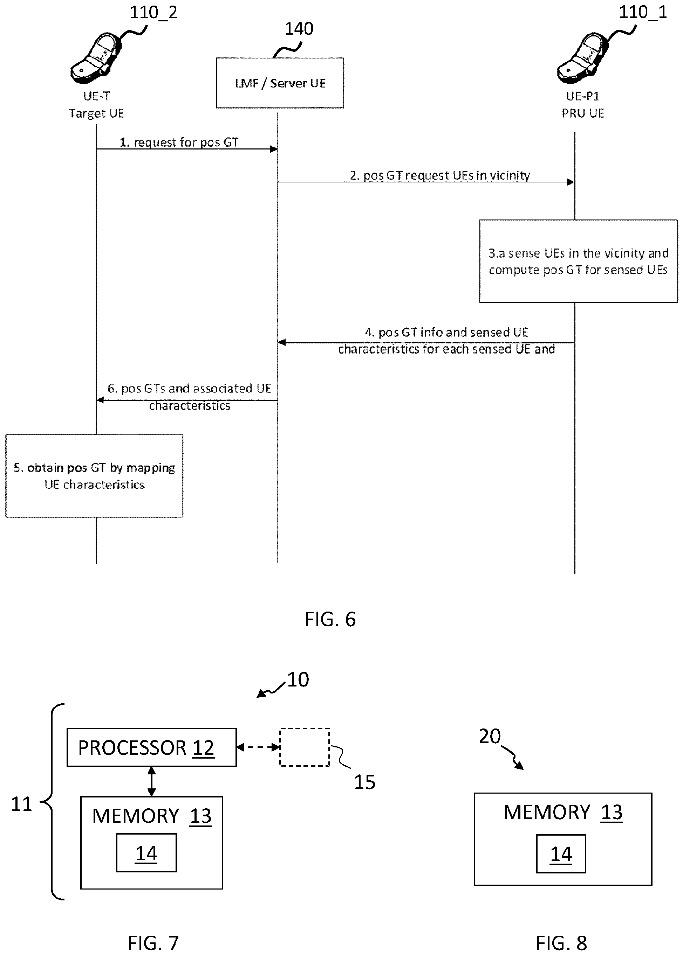

The component blocks of FIG. 2 are functional, and the functions described can be performed by a single physical entity, such as an apparatus as described with reference to FIG. 7, wherein the apparatus may be embodied either as the first UE 110_1 or the NW node 140. The functions described can also be implemented by a computer program, such as is described with reference to FIG. 8. The blocks illustrated in FIG. 2 can therefore represent actions in a method, functionality performed by an apparatus, and/or sections of instructions/code in a computer program.

The first UE may be at least one of the following:
a Position Reference Unit, PRU;
a UE capable of/that comprises means for sensing one or more characteristics of other UE; or
a UE capable of/that comprises means for evaluating a position of other UE.

The network node is an entity which assists (e.g., configures, estimates position, manages a positioning session) in positioning the second/target UE. If the target UE itself manages its positioning or estimates its position, then the network node could be considered to be the target UE itself. The network node may be at least one of the following:
a positioning server (which may perform position estimation of UEs, e.g. based on received measurements from target UEs and/or anchors (e.g. anchor UE/PRU or TRPs/gNBs),
a Location Management Function, LMF;
a UE (e.g. the second/target UE - for instance the positioning server could the target UE).

In block 201, the NW node (e.g. positioning server 140) sends, to the first UE (e.g. PRU 110_1) information indicative of:
i) a request 202 to determine information indicative of a position P110_2 of a second UE (e.g. target UE 110_2 - not shown), wherein the determination of the target UE's position is to be determined based at least in part on a set of one or more characteristics of the target UE, wherein each characteristic of the set is a non-unique characteristic that more than one UE can have. In this regard, each individual characteristic of the set may be a characteristic that is not exclusive to the target UE, but other UE could also have the same characteristic. Hence an individual characteristic of the set may not unambiguously identify/distinguish the target UE from other UE. However, the set of non-unique characteristics for the target UE may be used to identify the target UE and distinguish it from other UE (e.g. since the target UE may be the only UE having the set/combination of the particular individual characteristics); and
ii) the set of one or more characteristics C110_2 of the target UE.

In this regard, the positioning server may send, to the PRU, a request 202 for the target UE's position P110_2, wherein the request includes characteristics C110_2 of the target UE.

A characteristic of the set of characteristics may characterise at least one of the following:
a mobility status, e.g. of the target UE;
a coarse location, e.g. of the target UE;
a location, e.g. of the target UE, relative to a reference location,
an orientation, e.g. of the target UE, relative to a reference orientation,
a type of UE, e.g. of the target UE;
a transmission beam, e.g. from/to the target UE (for instance SL beam information such as beam ID or beam direction);
a transmission carrier frequency, e.g. used by the target UE (for instance SL/UL/DL carrier frequency);
a transmission Bandwidth Part, BWP, e.g. used by the target UE (for instance SL/UL/DL BWP);
a transmission radio resource, e.g. used by the target UE (for instance SL resource pool information, SL configured grant resource info);
a transmission data traffic, e.g. from/to the target UE (for instance message periodicity/size);
an antenna (for instance an antenna height); or
a transmission radio channel, (for instance: a number of paths, a last reported Channel Quality Indicator, CQI).

The request may comprise information indicating that the PRU is to sense UEs within a particular geographical region, responsive to which the PRU restricts its sensing to UEs within the particular geographical region. In this regard, the request may comprise information indicative of the geographical region within which all the UEs are to be sensed.

The NW node may be prompted to send the request responsive to receipt, from the target UE, of a request for the target's UE's position (not shown in FIG. 2). In this regard, the target UE may send, to the NW node, information indicative of a request to determine information indicative of a position of the target UE based at least in part on a set of one or more characteristics of the target UE, wherein each characteristic of the set of characteristics is a non-unique characteristic that other UE could also have. The target UE's request to the NW node could also include the set of characteristics of the target UE (which the NW node sends to the PRU in block 201). Alternatively, the NW node may separately determine the target UE's set of characteristics.

Via block 201, the positioning server effectively configures the PRU to determine and report: a position P110_2 of the target UE 110_2 based on determining a position of a UE 110_x sensed by the PRU as having a set of characteristics C110_x that match the set of characteristics C110_2 of the target UE 110_2 (i.e. the sensed UE 110_x is deemed to be the target UE 110_2 and hence the sensed UE's position P110_x is deemed to be the target UE's position P110_2).

In block 203, responsive to receipt of the request, the PRU determines/senses characteristics C110_i of one or more UE 110_i (e.g. UE within the PRU's vicinity). In this regard, receiving the request in block 201 triggers the PRU to determine characteristics of one or more UE within range/sensing range of the PRU.

In some examples, the positioning server sends to the PRU, e.g. in the request 202, an indication of a geographic region, and the PRU's determination of characteristics in block 203 is based on the received geographic region. For instance, the PRU only determines characteristics of UEs that are within the geographic region.

In block 204, the PRU performs a comparison of:
the set of characteristics C110_i (determined in block 203) of the UEs 110_i
   with
the set of characteristics C110_2 (received in block 201) of the target UE 110_2.

In block 205, the PRU determines a position P110_x of a UE 110_x based on the comparison.

For instance, based on the comparison, the PRU may select, from the one or more UE 110_i (i.e. UEs in the PRU's vicinity), a UE (i.e. UE 110_x) that has a set of characteristics C110_x that matches the set of characteristics C110_2 of the target UE 110_2. The PRU may then perform a position determination procedure on the selected UE 110_x. In this regard, the selected UE 110_x (i.e. the UE determined to have the same characteristics as the target UE) is considered to be the target UE. Hence, the determined position P110_x of the selected UE 110_x is considered to be the position P110_2 of the target UE 110_2.

The PRU may have a known location (i.e. a fixed location known to the PRU and/or the network node, and/or a capability to determine its own location - not least for example via NR Uu positioning or any suitable positioning procedure). The position of the selected UE 110_x may be determined by the PRU based on the PRU's own known location of the PRU as well as a determined (relative or absolute) position of the selected UE (e.g. a sensed distance and angle/direction to the selected UE). The PRU may have position determining means, such as sensors whose sensor measurements can be used to determine a position of an object. Such sensors may comprise, not least for example: Radio Detection And Ranging, Radar; Light Detection and Ranging, Lidar; ultrasonic sensors, on-board image capture devices/video cameras, etc. The PRU's position determining means may be NR SL positioning and/or 3GPP-based UE sensing.

In effect, in block 203 and 204, the PRU determines/senses which UE in its vicinity has a set of characteristics that matches the set of characteristics of the target UE, or whose set of characteristics differ from the set of characteristics of the target UE by less than a threshold amount. Depending on the characteristic, the threshold could be different. For example, for a velocity characteristic, the threshold could be a threshold value of a velocity difference (i.e. a difference between a sensed UE velocity and the target UE velocity). A threshold for each characteristic could be provided, e.g., by the location server or autonomously determined at the PRU.

Such use characteristics effectively identifies the target UE (albeit without using a unique identifier such as a unique UE ID e.g. International Mobile Equipment Identity, IMEI; Radio Network Temporary Identifier, RNTI; or Globally Unique Temporary Identity, GUTI). The PRU then determines a position of such an identified UE, wherein the position of such an identified UE is deemed to be the position of the target UE.

In block 206, the PRU sends, in a report 207 to the positioning server, information indicative of the position P110_2 of the target UE 110_2, wherein the position of the target UE is defined as the position P110_x of the UE 110_x (whose set of characteristics matches the set of characteristics of the target UE).

The PRU may determine (in block 205) and report (in block 206): an absolute position of the target UE, or a position of the target UE relative to the PRU's own position. In some example, the PRU may determine a position of the target UE relative to some other reference location or position, e.g. a fiducial point/marker. In some examples, the PRU may send, e.g. in the report 207, an indication of the reference location or position which the relative position of the target UE is based on/relative to. In some examples, the positioning server may send, e.g. in the request 202, an indication of the reference location or position based on which the target UE's relative position is to be based on/relative to.

The PRU may also determine, and report to the positioning server, an indication as to a level of accuracy or confidence in its determined position of the target UE.

Following on from block 205, the NW node may then send (not shown in FIG. 2), to the target UE, the information indicative of the position of the target UE as well as any associated information such as level of accuracy or confidence in the position and a reference location or position that a determined relative position is relative to. The NW node and/or target UE may use such positional information to generate a positioning GT for use in monitoring a performance of another positioning procedure. In some examples, the determined position of the target UE is labelled as a positioning GT for use in positioning performance monitoring and/or training (not least for example of an AI/ML-based/assisted positioning model which may reside at the target UE).

For the sake of simplicity and clarity, the above example method has been described with respect to sending a request to a first UE/PRU to determine a position of a second/target UE. However, it is to be appreciated that the method encompasses sending one or more requests to one or more first UEs/PRUs to determine one or more positions of one or more second/target UEs.

Examples of the invention may enable a determination of a position of a target UE without requiring the use or need of a unique identifier for the or each target UE. Instead, one or more target UEs can be identified via their characteristics. Positions for such identified one or more UEs can then be determined and reported. This can thereby, in effect, enable anonymous positioning by the PRU, i.e. the PRU can position the target UE without needing to know the target UE's unique identifier - thereby providing anonymity for the target UE. Moreover, since the target UE's position is determined via a PRU whose own position can be accurately known, and which can accurately determine the relative position of the target UE via positioning means of the PRU (e.g. Radar, Lidar), then the target UE's position can itself be accurately determined. This may enable the accurately determined position of the target UE to be used a positioning GT, e.g. for monitoring the performance of a separate positioning mechanism for positioning the target UE.

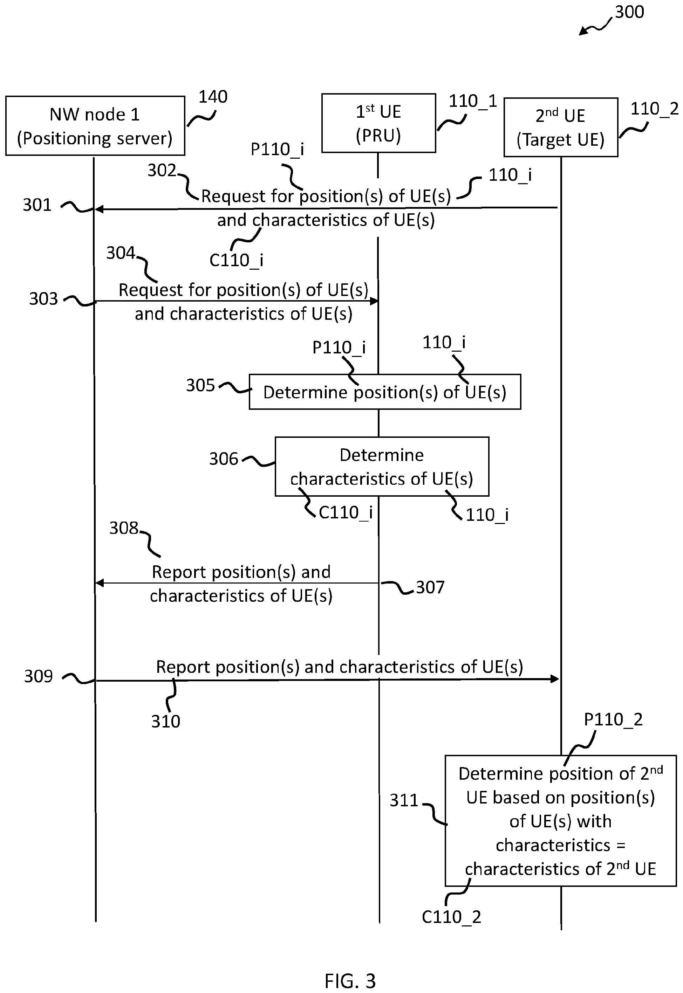

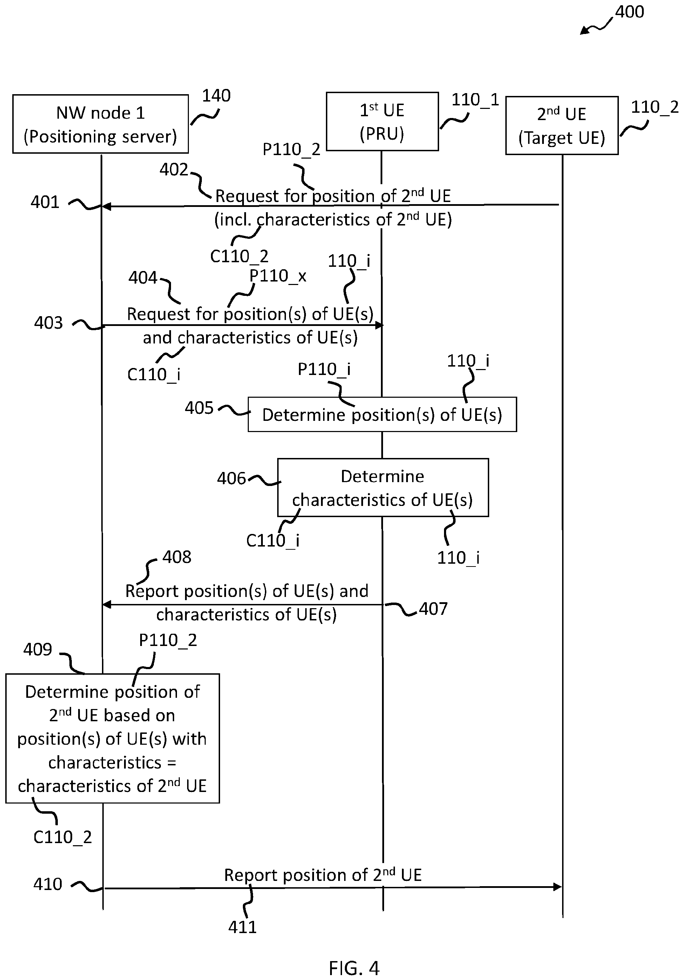

In the above described example, the PRU receives a set of characteristics of target UE and the PRU then determines a position of a UE, within the PRU's vicinity/sensing range, that has a set of characteristics corresponding to the set of characteristics of target UE. In other examples, such as described below, the PRU does not receive set of characteristics of target UE. Instead, the PRU determines a position of each UE within the PRU's vicinity/sensing range. The PRU also determines a set of characteristics for each UE within the PRU's vicinity/sensing range. The PRU then sends all of the determined positions and sets of characteristics for all the UEs within the PRU's vicinity/sensing range to the NW node. Then, as will be discussed further below with reference to the method of FIG. 3, the NW node sends the determined positions and sets of characteristics for all the UEs to the target UE. The target UE then, having knowledge of its own set of characteristics, can select the position that is associated with a set of characteristics that corresponds to the target UE's own set of characteristics, whereupon such a selected position is deemed to be the target UE's position. Alternatively, as will be discussed further below with reference to the method of FIG. 4 (which can, in a sense, be considered as a hybrid of the methods of FIG. 2 and FIG. 3), the NW node is aware of the target UE's set of characteristics (e.g. having separately determined or been informed of the same, e.g. via the target UE) and the NW node performs the selection step to determine the target UE's position. The description provided with reference to FIG. 1 is also relevant to FIGs. 3 and 4.

FIG. 3 schematically illustrates another method 300 for determining a position of a (second) target UE 110_2 according to another example of the subject matter described herein. The method shows signaling between a network node (e.g. a positioning server 140), a first UE 110_1 (e.g. a PRU) and a second UE 110_2 (e.g. a target UE).

FIG. 3 can be considered to illustrate a plurality of methods, in the sense that FIG. 3 can be considered to illustrate one or more actions performed by/at a plurality of actors/entities (e.g. apparatuses such as the first UE 110_1, the second UE 110_2, or the NW node 140). FIG. 3 can therefore be considered to illustrate a plurality of individual methods performed by each respective individual actor/entity of the plurality of the actors/entities.

The component blocks of FIG. 3 are functional, and the functions described can be performed by a single physical entity, such as an apparatus as described with reference to FIG. 7, wherein the apparatus may be embodied either as: the first UE 110_1, the second UE 110_2, or the NW node 140. The functions described can also be implemented by a computer program, such as is described with reference to FIG. 8. The blocks illustrated in FIG. 3 can therefore represent actions in a method, functionality performed by an apparatus, and/or sections of instructions/code in a computer program.

In block 301, the second UE (e.g. target UE), sends to the NW node (e.g. positioning server) a request 302 for information indicative of:
one or more positions P110_i of one or more UE 110_i; and
one or more sets of characteristics C110_i for the respective one or more UE,
wherein each characteristic of the at least one set is a non-unique characteristic that more than one UE can have.

In block 303, the positioning server, sends to the first UE (e.g. PRU) a request 304 for information indicative of:
one or more positions P110_i of one or more UE 110_i; and
one or more sets of characteristics C110_i for the respective one or more UE,
wherein each characteristic of the at least one set is a non-unique characteristic that more than one UE can have.

Via block 303, the positioning server effectively configures the PRU to determine and report: one or more positions P11 0_i and one or more sets of characteristics C110_i for the one or more UE 110_i.

In block 305, responsive to receipt of the request 304, the PRU determines one or more positions P110_i of one or more UE 110_i (i.e. one or more UE within the vicinity/range of the PRU). In this regard, the PRU may have position determining means, such as its own on board sensors whose sensor measurements can be used to determine a position of an object - such as a UE. Such sensors may comprise, not least for example: Radar; Lidar; ultrasonic sensors, on-board image capture devices/video cameras, etc. The PRU's position determining means may be NR SL positioning and/or 3GPP-based UE sensing.

In block 306, the PRU determines one or more sets of characteristics C110_i for the respective one or more UE 110_i.

In block 307, the PRU sends, to the positioning server, the determined one or more positions P110_i and the one or more sets of characteristics C110_i for the respective one or more UE 110_i. Such information may be send via a report 308.

In block 309, the positioning server sends, to the target UE, the determined one or more positions P110_i and the one or more sets of characteristics C110_i for the respective one or more UE 110_i. Such information may be send via a report 310.

In block 311, the target UE determines its position P110_2 based, at least in part on:
the received one or more sets of characteristics C110_i of the one or more UE 110_i;
the received one or more positions P110_i of the one or more UE 110_i, and
the target UE's own set of characteristics C110_2.

In this regard, the target UE, having knowledge of its own set of characteristic C110_2, identifies which set of characteristics C110_x of received set of characteristics C110_i matches, or most closely matches, its own set of characteristics C1 10_2 (e.g. whose set of characteristics differs the least from the target UE's own set of characteristics). The target UE then identifies the position P110_x of the UE 110_x that is associated with the identified set of characteristics C110_x. The target UE's position P110_2 is then deemed to be the position P110_x of the UE 110_x whose set of characteristics C110_x matches, or most closely matches, the target UE's set of characteristics C110_2.

As discussed above with regards to FIG. 2, the target UE may use the received position P110_2, as well as any other received associated information (such as level of accuracy or confidence in the position and a reference location or position that a determined relative position is relative to) to generate a positioning GT for use in positioning performance monitoring.

FIG. 4 schematically illustrates another method 400 for determining a position of a (second) target UE 110_2 according to another example of the subject matter described herein. The method shows signaling between a network node (e.g. a positioning server 140), a first UE 110_1 (e.g. a PRU) and a second UE 110_2 (e.g. a target UE).

FIG. 4 can be considered to illustrate a plurality of methods, in the sense that FIG. 4 can be considered to illustrate one or more actions performed by/at a plurality of actors/entities (e.g. apparatuses such as the first UE 110_1, the second UE 110_2, or the NW node 140). FIG. 4 can therefore be considered to illustrate a plurality of individual methods performed by each respective individual actor/entity of the plurality of the actors/entities.

The component blocks of FIG. 4 are functional, and the functions described can be performed by a single physical entity, such as an apparatus as described with reference to FIG. 7, wherein the apparatus may be embodied either as: the first UE 110_1, the second UE 110_2, or the NW node 140. The functions described can also be implemented by a computer program, such as is described with reference to FIG. 8. The blocks illustrated in FIG. 3 can therefore represent actions in a method, functionality performed by an apparatus, and/or sections of instructions/code in a computer program.

In block 401, the second UE (e.g. target UE), sends to the NW node (e.g. positioning server), a request 402 for its own position P110_2. The request also comprises a set of characteristics C110_2 for the target UE, wherein each characteristic of the set is a non-unique characteristic that more than one UE can have.

In block 403, the positioning server, sends to the first UE (e.g. PRU) a request 404 for information indicative of:
one or more positions P110_i of one or more UE 110_i; and
one or more sets of characteristics C110_i for the respective one or more UE,
wherein each characteristic of the at least one set is a non-unique characteristic that more than one UE can have.

Via block 403, the positioning server effectively configures the PRU to determine and report: one or more positions P11 0_i and one or more sets of characteristics C110_i for the one or more UE 110_i.

It is noted that the request 404 sent to the PRU does not include information indicative of the set of characteristics C1 10_2 of the target UE.

In block 405, responsive to receipt of the request 404, the PRU determines one or more positions P110_i of one or more UE 110_i (i.e. one or more UE within the vicinity/range of the PRU).

In block 406, the PRU determines one or more sets of characteristics C110_i for the respective one or more UE 110_i.

In block 407, the PRU sends, to the positioning server, the determined one or more positions P110_i and the one or more sets of characteristics C110_i for the respective one or more UE 110_i. Such information may be send via a report 408.

In block 409, the positioning server determines the target UE's position P110_2 based, at least in part on:
the one or more sets of characteristics C110_i of the one or more UE 110_i (received in block 407);
the one or more positions P110_i of the one or more UE 110_i (received in block 407); and
the set of characteristics C110_2 of the target UE (received in block 401).

In this regard, the positioning server, identifies which set of characteristics C110_x of received set of characteristics C110_i matches, or most closely matches, the target UE's set of characteristics C110_2. The positioning server then identifies the position P110_x of the UE 110_x that is associated with the identified set of characteristics C110_x. The target UE's position P1 10_2 is then deemed to be the position P110_x of the UE 110_x whose set of characteristics C110_x matches/most closely matches the target UE's set of characteristics C110_2.

In block 410, the positioning server sends, to the target UE, the target UE's position P1 10_2. Such information may be send via a report 411.

As discussed above with regards to FIG. 2, the target UE may use the received position P110_2, as well as any other received associated information (such as level of accuracy or confidence in the position and a reference location or position that a determined relative position is relative to) to generate a positioning GT for use in positioning performance monitoring.

A key difference between FIG. 2's method 200 and each of FIG. 3 and 4's methods 300 and 400 is that, in methods 300 and 400, the PRU is not provided with the set of characteristics of the target UE. Instead, the PRU determines positions and sets of characteristics for all UE in its vicinity/sensing range, and reports the same to the positioning server.

In method 300, the target UE receives all the positions and sets of characteristics of the UEs, and determines its own position based on the received positions and sets of characteristics of each of the UEs as well as the target UE's own set of characteristics. The target UE is thereby able to determine its location without the positioning server or PRU requiring the need or use of a unique identifier for the target UE.

In method 400, the positioning server determines the position of the target UE using the positions and sets of characteristics of each of the UEs as well as the target UE's own set of characteristics. The target UE's position is thereby able to be determined without the PRU requiring the need or use of a unique identifier for the target UE.

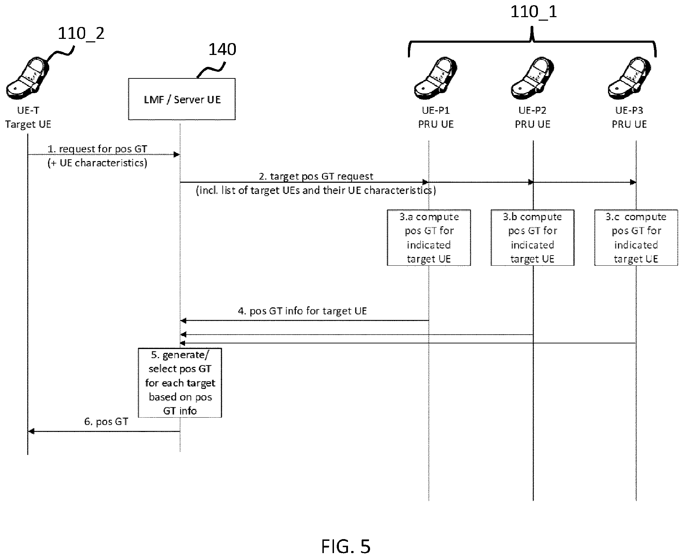

FIG. 5 schematically illustrates a yet further example of a method in accordance with the subject matter described herein. The method of FIG. 5 is broadly analogous to the method 200 of FIG. 2, albeit wherein the method is for determining a positioning GT for a target UE, and wherein multiple PRUs are employed. The method of FIG. 5 shows signaling between:
a target UE 110_2 (also referred to as UE-T),
a positioning server 140 (also referred to as LMF or Server UE), and
a plurality of PRUs 110_1, namely three PRU's in this instance (also referred to as UE-P1, UE-P2 and UE-P3).

A positioning GT for an object (e.g. target UE) can be considered as being an estimated position of the object which is has an accuracy over a threshold level, i.e. the estimated position is deemed to be sufficiently accurate such that it can be labelled as a true position of the object.

Each PRU has sensing capabilities that are exploited for sensing and ranging purposes (in this regard, a PRU could be referred to as a sensing UE). In this case, each PRU can sense a UE in its vicinity (i.e. within range of its sensors) and identify a distance and an angle to the sensed UE - or a distance and an angle to between the sensed UE and a landmark or other reference position (such a landmark or other reference position having a position known to each of the PRU and positioning server - e.g./ a lamp post in a street).

Each PRU, with its awareness of its own absolute position, can estimate the position for the sensed UEs, such estimated positions may be labelled as a ground truth for the sensed UEs.

The sensing and ranging at each PRU may be based on each PRU's own sensors (e.g., sensors in a vehicle if the PRU is a vehicular type of UE), NR SL positioning and/or 3GPP-based sensing (such as is expected in Rel-19 and beyond feature).

In order to map/associate a determined position/positioning GT to a particular target UE, UE characteristics of the target UE can be taken into account. In particular, target UE characteristics can be mapped to the determined UE characteristics to obtain the positioning GT of the target UE. In this regard, whilst sensing the UEs, a PRU can identify certain UE characteristics of the sensed UEs. The target UE can be identified from the sensed UEs as being the UE of the sensed UEs that has UE characteristics that match/correspond to the UE characteristics of the target UE. Hence, the determined position/positioning GT of such an identified UE equates to the position/positioning GT of the target UE.

In some examples, sensing management and configuration of the PRUs can come from a Sensing Management Function, SeMF. In some examples, if the PRUs are controlled only by an LMF, there may be a need for signalling between the LMF and a SeMF.

In the following discussion of the method of FIG. 5, for simplicity, the target UE position estimated by a PRU is referred to simply as GT or positioning GT. It is to be appreciated that an estimated position may not always be a true location of the target UE. Hence, positioning GT information may further include quality information which captures uncertainty in the position estimate.

In the method of FIG. 5, the PRU is requested to sense UEs in their vicinity that have certain UE characteristics (i.e. UE characteristics that correspond to UE characteristics of the target UE whose GT to be determined).

In step-1, the target UE 110_2 requests the positioning server 140 (e.g. LMF or Server UE) to provide a GT so that the target UE can perform e.g., positioning performance monitoring.

In the request, target UE includes its own UE characteristics. The UE characteristics include one or more of:
- Mobility information, not least such as: Velocity, Direction, Trajectory, whether static or not
- Coarse location information, not least such as: Coarse location, Geographical Zone ID, Cell ID
- Relative location/ranging information, not least such as: another UE, a reference point/direction, or an object/landmark in the environment that the GT's relative position is relative to/based on
- SL beam information, not least such as: Beam ID, Beam direction
- SL/UL/DL carrier, SL/UL/DL BWP and/or SL resource pool information
- UE type information, not least such as: Vulnerable Roadside User, VRU; Vehicular UE, etc.
- SL traffic and/or resource information, not least such as: message periodicity/size, SL configured grant resource information
- Antenna info not least such as: Antenna height
- Radio channel info not least such as: No. of paths, last reported CQI.
- UE ID: SL UE ID, Discovery ID

In step-2: the positioning server configures/requests a PRU to generate and report a positioning ground truth, GT for a target UE identified by its UE characteristics (as reported by the target UE in Step-1). In the request, the positioning server includes a set of UE characteristics of the target UE. In this regard, the target UE (for which a positioning GT is requested) is not identified via a unique UE ID, but instead it is identified (i.e. disambiguated from other UE in the vicinity of the PRU) by virtue of a set of the one or more of the above-mentioned characteristics of the target UE. In examples where the positioning server requests positioning GTs for plural target UEs, the request may comprise plural set of characteristics, one set for each target UE. In this regard, one can consider that the request comprises, in effect, a list of target UEs defined/identified by their respective set of characteristics.

In the example request shown in step 2, the request includes a list of target UEs and a set of UE characteristics for each target UE. In this regard, a target UE identifier is assigned to each set of UE characteristics. This allows a PRU simply to report, i.e. in step 4, a target UE identifier and its associated determined positioning GT (instead of the PRU having to report the set of UE characteristics for a target UE and its associated determined positioning GT).

The request of step 2, "target pos GT request", may contain information indicative of one or more of the following:
- one or more of characteristics of the target UE, via which the target UE can be identified by the PRU from the UEs in the PRU's vicinity/sensing range
- attributes of the required GT, i.e. an absolute/relative position estimate, whether the PRU has LOS or NLOS to the target UE, and/or whether the PRU is indoor or outdoor, etc.
- a reference for relative location/ranging information, e.g., another UE, a reference point/direction, an object/landmark in the environment

The positioning server may be considered to have information on the presence of PRUs and an awareness of at least their coarse location. This coarse location may be used by the position server to select/identify those PRUs which are to be triggered to generate a GT/position estimate for a target UE (e.g. based on the positioning server likewise being aware of at least a coarse location of the target UE). Similarly, this coarse location may be used by the position server to select/identify a landmark or reference position that the GT/position estimate is to be based on/determined relative to.

In the example shown the positioning server requests multiple PRUs each to generate a GT for a target UE.

In step-3: each PRU:
- senses UEs and their characteristics,
- identifies a UE of the sensed UEs that has a set of characteristics that corresponds to the characteristics indicated in step-2 (i.e. the target UE's characteristics), and
- determines a positioning GT of the identified UE, using e.g., the PRU's own sensors, SL positioning, or 3GPP-based sensing (such as potential Rel-19 and beyond feature).

In this regard, the positioning GT of the target UE may be determined based on:
- UE characteristics indicated in "target pos GT request"
- the PRU's own location information (e.g., absolute position) and environment awareness that could be achieved via:
   sensing information, e.g. via: NR/6G-based sensing (Rel-19) and/or local sensors; and/or
   ranging information, e.g. via: sidelink positioning (e.g., Rel 18) and/or local sensors, to determine a range (distance and/or angle) with respect to: the PRU itself, another UE, or another object or landmark in the environment.

In step-4, each PRU reports its determined positioning GT of the target UE to positioning server.

In this regard, the report may comprise positioning GT information for the target UE that contains information indicative of:
- the positioning GT, not least for example: a position estimate, LOS/NLOS and/or indoor/outdoor, etc.
- a quality indicator/metric of the positioning GT, e.g. a confidence level of the positioning GT, which could be determined based on e.g. sensor accuracy.
- the positioning GT determination method employed, e.g. if via Lidar, Radar, NR SL etc.
- a landmark or reference position that the positioning GT is based on/determined relative to.

In step-5, which may be used where multiple PRUs report different positioning GTs for the same target UE, the positioning server may generate its own positioning GT for the target UE based on the received positioning GTs. For instance the positioning server may generate an average of all the reported positioning GTs (e.g. a weighted average of all the reported positioning GTs for the target UE - weighted based on a quality indicator/metric associated with each respective reported positioning GT). Alternatively, the positioning server may select one of the reported positioning GTs, e.g. selecting the the reported positioning GT having the best quality indicator/metric.

In step-6, the positioning server provides the positioning GT (that was generated/selected in step-5) to the target UE-T.

FIG. 6 schematically illustrates a yet further example of a method in accordance with the subject matter described herein. The method of FIG. 6 is broadly analogous to the method 300 of FIG. 3, albeit wherein the method is for determining a positioning GT for a target UE. The method of FIG. 5 shows signaling between:
a target UE 110_2 (also referred to as UE-T),
a positioning server 140 (also referred to as LMF or Server UE), and
a PRU 110_1 (also referred to as UE-P1).

As will all the above described methods, it is to be appreciated that whilst only a single target UE and a single PRU is described in this particular method of FIG. 5, in other examples there could be a plurality of target UEs and/or a plurality of PRUs.

In the method of FIG. 6, the PRU is configured/requested to sense all the UEs in its vicinity and report characteristics of each of the sensed UEs as well as report a positioning GT for each of the sensed UEs. This differs from the method of FIG. 5, wherein the PRU is configured/requested to sense characteristics of UEs in its vicinity and only report positioning GT for UE(s) whose characteristics matches the characteristics of the target UE(s).

Further, different from method of FIG. 5, in the method of FIG. 6, the UE characteristics and associated positioning GT for each of the sensed UE are shared with the target UE, which determines its own positioning GT based on them (i.e. by determining the positioning GT associated with a UE having the same characteristics as the target UE).

In step-1: the target UE requests the positioning server to provide a positioning GT, e.g. so that the target UE can perform positioning performance monitoring.

In step-2, the positioning server (e.g. LMF or Server UE) requests a (nearby) PRU to generate and report a positioning GT for all UEs in the PRU's vicinity.

In step-3, the PRU senses UEs in its vicinity and determines a positioning GT of each sensed UEs using e.g., its own sensors, SL positioning, 3GPP-based sensing (potential Rel-19 and beyond feature).

In step-4, the PRU reports, to the positioning server, the positioning GTs of the sensed UEs and the associated characteristics of the sensed UEs.

In this regard, the PRU may send positional GT information that that contains:
- UE characteristics for each UE sensed UE
- a positioning GT for each UE sensed UE, with information indicative of: a position estimate, LOS/NLOS and/or indoor/outdoor, etc.
- a quality indicator/metric of the positioning GT for each UE sensed UE
- the positioning GT determination method employed for each UE sensed UE

In step-5, the positioning server forwards the positioning GTs and characteristics for each sensed UE.

In step-6, the target UE maps its own UE characteristics to the received characteristics for each sensed UE, to identify the positioning GTs of a UE whose characteristics correspond to those of the target UE. The target UE's positioning GT is then defined as the duly identified positioning GT.

The target UE can use the positioning GT to perform positioning performance monitoring, e.g. of an AI/ML model used in AI/ML-based positioning of the UE.

Advantageously, examples of the disclosure can be used to estimate a position/location of a UE, not least for example low complexity UE devices that may not have the means, capability or on-board hardware/software to calculate their own position estimate accurately. Advantageously, examples of the disclosure may also support effective positioning performance monitoring and positioning integrity evaluations.

It will be understood that each block and combinations of blocks illustrated in FIGs. 2-6, as well as the further functionality described above, can be implemented by various means, such as hardware, firmware, and/or software including one or more computer program instructions. For example, one or more of the functions described above can be performed by a duly configured apparatus (such as an apparatus [UE, PRU, positioning server] comprising means for performing the above described functionality). One or more of the functions/functionality described above can be embodied by a duly configured computer program (such as a computer program comprising computer program instructions which embody the functions/functionality described above and which can be stored by a memory storage device and performed by a processor).

As will be appreciated, any such computer program instructions can be loaded onto a computer or other programmable apparatus (i.e. hardware) to produce a machine, such that the instructions when performed on the programmable apparatus create means for implementing the functions/functionality specified in the blocks. These computer program instructions can also be stored in a computer-readable medium that can direct a programmable apparatus to function in a particular manner, such that the instructions stored in the computer-readable memory produce an article of manufacture including instruction means which implement the function specified in the blocks. The computer program instructions can also be loaded onto a programmable apparatus to cause a series of operational actions to be performed on the programmable apparatus to produce a computer-implemented process such that the instructions which are performed on the programmable apparatus provide actions for implementing the functions/functionality specified in the blocks.

Various, but not necessarily all, examples of the present disclosure can take the form of a method, an apparatus, or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational block/steps/actions to be performed by the processor(s) to produce a computer implemented process such that the instructions which execute on the processor(s) provide block/steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

FIG. 7 schematically illustrates a block diagram of an apparatus 10 for performing the methods, processes, procedures and signalling described in the present disclosure and illustrated in FIGs. 2 - 6, in this regard the apparatus can perform the roles of: the positioning server 140, the PRU 110_1 or the target UE 110_2 of the methods illustrated and described above. The component blocks of FIG. 7 are functional and the functions described can be performed by a single physical entity.

The apparatus comprises a controller 11, which could be provided within a device such as a positioning server 140, the PRU 110_1 or the target UE 110_2.

The controller 11 can be embodied by a computing device, not least such as those mentioned above. In some, but not necessarily all examples, the apparatus can be embodied as a chip, chip set, circuitry or module, i.e. for use in any of the foregoing. As used here 'module' refers to a unit or apparatus that excludes certain parts/components that would be added by an end manufacturer or a user.

Implementation of the controller 11 can be as controller circuitry. The controller 11 can be implemented in hardware alone, have certain aspects in software including firmware alone or can be a combination of hardware and software (including firmware).

The controller 11 can be implemented using instructions that enable hardware functionality, for example, by using executable instructions of a computer program 14 in a general-purpose or special-purpose processor 12 that can be stored on a computer readable storage medium 13, for example memory, or disk etc, to be executed by such a processor 12.

The processor 12 is configured to read from and write to the memory 13. The processor 12 can also comprise an output interface via which data and/or commands are output by the processor 12 and an input interface via which data and/or commands are input to the processor 12. The apparatus can be coupled to or comprise one or more other components 15 (not least for example: a radio transceiver, sensors, input/output user interface elements and/or other modules/devices/components for inputting and outputting data/commands).

The memory 13 stores instructions such as a computer program 14 comprising such instructions (e.g. computer program instructions/code) that controls the operation of the apparatus 10 when loaded into the processor 12. The instructions of the computer program 14, provide the logic and routines that enables the apparatus to perform the methods, processes and procedures described in the present disclosure and illustrated in FIGs. 2 - 6. The processor 12 by reading the memory 13 is able to load and execute the computer program 14.

The instructions may be comprised in a computer program, a non-transitory computer readable medium, a computer program product, a machine readable medium. The term "non-transitory," as used herein, is a limitation of the medium itself (i.e. tangible, not a signal) as opposed to a limitation on data storage persistency (e.g. RAM vs. ROM). In some but not necessarily all examples, the computer program instructions may be distributed over more than one computer program.

Although the memory 13 is illustrated as a single component/circuitry it can be implemented as one or more separate components/circuitry some or all of which can be integrated/removable and/or can provide permanent/semi-permanent/ dynamic/cached storage.

Although the processor 12 is illustrated as a single component/circuitry it can be implemented as one or more separate components/circuitry some or all of which can be integrated/removable. The processor 12 can be a single core or multi-core processor.

The apparatus can include one or more components for effecting the methods, processes and procedures described in the present disclosure and illustrated in FIGs. 2 - 6. It is contemplated that the functions of these components can be combined in one or more components or performed by other components of equivalent functionality. The description of a function should additionally be considered to also disclose any means suitable for performing that function.

Where a structural feature has been described, it can be replaced by means for performing one or more of the functions of the structural feature whether that function or those functions are explicitly or implicitly described.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

The apparatus can, for example, be a client device, a server device, a mobile cellular telephone, a base station in a mobile cellular telecommunication system, a wireless communications device, a hand-portable electronic device, a location/position tag, a hyper tag etc. The apparatus can be embodied by a computing device, not least such as those mentioned above. However, in some examples, the apparatus can be embodied as a chip, chip set, circuitry or module, i.e. for use in any of the foregoing.

In one example, the apparatus is embodied on a hand held portable electronic device, such as a mobile telephone, mobile communication device, wearable computing device or personal digital assistant, that can additionally provide one or more audio/text/video communication functions (for example tele-communication, video-communication, and/or text transmission (Short Message Service (SMS)/ Multimedia Message Service (MMS)/emailing) functions), interactive/non-interactive viewing functions (for example web-browsing, navigation, TV/program viewing functions), music recording/playing functions (for example Moving Picture Experts Group-1 Audio Layer 3 (MP3) or other format and/or (frequency modulation/amplitude modulation) radio broadcast recording/playing), downloading/sending of data functions, image capture function (for example using a (for example in-built) digital camera), and gaming functions, or any combination thereof.

In accordance with a first aspect of the disclosure, where the apparatus is provided within a PRU 110_1, the apparatus comprises:
at least one processor 12; and
at least one memory 13 storing instructions that, when executed by the at least one processor 12, cause the apparatus at least to:
   receive, from a network node, information indicative of:
      a request to determine information indicative of a position of a second UE based at least in part on a set of one or more characteristics of the second UE, wherein each characteristic of the set is a non-unique characteristic that more than one UE can have, and
      the set of one or more characteristics of the second UE;
   determine a set of one or more characteristics of a UE, wherein the determination is performed based at least in part on the received information;
   perform a comparison of:
      the determined set of one or more characteristics of the UE, with
      the received set of one or more characteristics of the second UE;
   determine a position of the UE, wherein the determination of the position is performed based at least in part on the comparison; and
   send, to the network node, information indicative of the position of the second UE, wherein the position of the second UE is defined as the position of the UE.

In accordance with the first aspect of the disclosure, where the apparatus is provided within a positioning server 140, the apparatus comprises:
at least one processor 12; and
at least one memory 13 storing instructions that, when executed by the at least one processor 12, cause the apparatus at least to:
   receive, from a second User Equipment, UE, information indicative of:
      a request to determine information indicative of a position of the second UE based at least in part on a set of one or more characteristics of the second UE, wherein each characteristic of the set of one or more characteristics is a non-unique characteristic that more than one UE can have, and
      the set of one or more characteristics of the second UE;
   send, to a first UE, information indicative of the request and the set of one or more characteristics of the second UE;
   receive, from the first UE responsive to sending the request, information indicative of the position of the second UE; and
   sende, to the second UE, the information indicative of the position of the second UE.

In accordance with a second aspect of the disclosure, where the apparatus is provided within a PRU 110_1, the apparatus comprises:
at least one processor 12; and
at least one memory 13 storing instructions that, when executed by the at least one processor 12, cause the apparatus at least to:
   receive, from a network node, information indicative of a request for information indicative of:
      a position of a UE, and
      a set of one or more characteristics of the UE, wherein each characteristic of the set is a non-unique characteristic that more than one UE can have;
   determine, based at least in part on the received information:
      the position of the UE, and
      the set of one or more characteristics of the UE; and
   send, to the network node, information indicative of:
      the determined position of the UE; and
      the determined set of one or more characteristics of the UE.

In accordance with the second aspect of the disclosure, where the apparatus is provided within a target UE 110_2, the apparatus comprises:
at least one processor 12; and
at least one memory 13 storing instructions that, when executed by the at least one processor 12, cause the apparatus at least to:
   send, to a network node, information indicative of a request for information indicative of:
      a position of a UE, and
      a set of one or more characteristics of the UE, wherein each characteristic of the set is a non-unique characteristic that more than one UE can have;
   receive, from the network node responsive to sending the information, information indicative of:
      the set of one or more characteristics of the UE, and
      the position of the UE; and
   determine a position of the second UE based, at least in part on:
      the received set of one or more characteristics of the UE,
      the received position of the UE, and
      a set of one or more characteristics of the UE.

In accordance with a third aspect of the disclosure, where the apparatus is provided within a positioning server 140, the apparatus comprises:
at least one processor 12; and
at least one memory 13 storing instructions that, when executed by the at least one processor 12, cause the apparatus at least to:
   receive from a second User Equipment, UE, information indicative of:
      a first request to determine information indicative of a position of the second UE based at least in part on a set of one or more characteristics of the second UE, wherein each characteristic of the set of one or more characteristics is a non-unique characteristic that more than one UE can have, and
      the set of one or more characteristics of the second UE;
   send, to a first UE information indicative of a second request for information indicative of:
      a position of a UE, and
      a set of one or more characteristics of the UE;
   receive, from the first UE, information indicative of:
      the position of the UE, and
      the set of one or more characteristics of the UE;
   determine a position of the second UE based, at least in part on:
      the set of one or more characteristics of the UE,
      the position of the UE, and
      the set of one or more characteristics of the UE;
   send, to the second UE, information indicative of the determined position of the second UE.

According to some examples of the present disclosure, there is provided a system comprising at least one: PRU 110_1, positioning server 140 and/or target UE 110_2 as described above.

The above described examples find application as enabling components of: tracking systems, automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things (IOT); Vehicle-to-everything (V2X), virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

FIG.8, illustrates a computer program 14 which may be conveyed via a delivery mechanism 20. The delivery mechanism 20 can be any suitable delivery mechanism, for example, a machine readable medium, a computer-readable medium, a non-transitory computer-readable storage medium, a computer program product, a memory device, a solid-state memory, a record medium such as a Compact Disc Read-Only Memory (CD-ROM) or a Digital Versatile Disc (DVD) or an article of manufacture that comprises or tangibly embodies the computer program 14. The delivery mechanism can be a signal configured to reliably transfer the computer program. An apparatus can receive, propagate or transmit the computer program as a computer data signal.

In accordance with the first aspect of the disclosure, there is provided a computer program comprising instructions, which when executed by an apparatus (e.g. a PRU 110_1), cause the apparatus to perform at least the following or for causing performing at least the following:
receive, from a network node, information indicative of:
   a request to determine information indicative of a position of a second UE based at least in part on a set of one or more characteristics of the second UE, wherein each characteristic of the set is a non-unique characteristic that more than one UE can have, and
   the set of one or more characteristics of the second UE;
determine a set of one or more characteristics of a UE, wherein the determination is performed based at least in part on the received information;
perform a comparison of:
   the determined set of one or more characteristics of the UE, with
   the received set of one or more characteristics of the second UE;
determine a position of the UE, wherein the determination of the position is performed based at least in part on the comparison; and
send, to the network node, information indicative of the position of the second UE, wherein the position of the second UE is defined as the position of the UE.

In accordance with the first aspect of the disclosure, there is provided computer program comprising instructions, which when executed by an apparatus (e.g. a positioning server 140), cause the apparatus to perform at least the following or for causing performing at least the following:
receive, from a second User Equipment, UE, information indicative of:
   a request to determine information indicative of a position of the second UE based at least in part on a set of one or more characteristics of the second UE, wherein each characteristic of the set of one or more characteristics is a non-unique characteristic that more than one UE can have, and
   the set of one or more characteristics of the second UE;
send, to a first UE, information indicative of the request and the set of one or more characteristics of the second UE;
receive, from the first UE responsive to sending the request, information indicative of the position of the second UE; and
send, to the second UE, the information indicative of the position of the second UE.

In accordance with the second aspect of the disclosure, there is provided a computer program comprising instructions, which when executed by an apparatus (e.g. a PRU 110_1), cause the apparatus to perform at least the following or for causing performing at least the following:
receive, from a network node, information indicative of a request for information indicative of:
   a position of a UE, and
   a set of one or more characteristics of the UE, wherein each characteristic of the set is a non-unique characteristic that more than one UE can have;
determine, based at least in part on the received information:
   the position of the UE, and
   the set of one or more characteristics of the UE; and
send, to the network node, information indicative of:
   the determined position of the UE; and
   the determined set of one or more characteristics of the UE.

In accordance with the second aspect of the disclosure, there is provided computer program comprising instructions, which when executed by an apparatus (e.g. a target UE 110_2), cause the apparatus to perform at least the following or for causing performing at least the following:
send, to a network node, information indicative of a request for information indicative of:
   a position of a UE, and
   a set of one or more characteristics of the UE, wherein each characteristic of the set is a non-unique characteristic that more than one UE can have;
receive, from the network node responsive to sending the information, information indicative of:
   the set of one or more characteristics of the UE, and
   the position of the UE; and
determine a position of the second UE based, at least in part on:
   the received set of one or more characteristics of the UE,
   the received position of the UE, and
   a set of one or more characteristics of the UE.

In accordance with the third aspect of the disclosure, there is provided computer program comprising instructions, which when executed by an apparatus (e.g. a positioning server 140), cause the apparatus to perform at least the following or for causing performing at least the following:
receive, from a second User Equipment, UE, information indicative of:
   a first request to determine information indicative of a position of the second UE based at least in part on a set of one or more characteristics of the second UE, wherein each characteristic of the set of one or more characteristics is a non-unique characteristic that more than one UE can have, and
   the set of one or more characteristics of the second UE;
send, to a first UE information indicative of a second request for information indicative of:
   a position of a UE, and
   a set of one or more characteristics of the UE;
receive, from the first UE, information indicative of:
   the position of the UE, and
   the set of one or more characteristics of the UE;
determine a position of the second UE based, at least in part on:
   the set of one or more characteristics of the UE,
   the position of the UE, and
   the set of one or more characteristics of the UE;
send, to the second UE, information indicative of the determined position of the second UE.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' can refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

In this description, the wording 'connect', 'couple' and 'communication' and their derivatives mean operationally connected/coupled/in communication. It should be appreciated that any number or combination of intervening components can exist (including no intervening components), i.e. so as to provide direct or indirect connection/coupling/communication. Any such intervening components can include hardware and/or software components.

As used herein, the term "determine/determining" (and grammatical variants thereof) can include, not least: evaluating, calculating, computing, processing, deriving, measuring, investigating, identifying, looking up (for example, looking up in a table, a database or another data structure), ascertaining and the like. Also, "determining" can include receiving (for example, receiving information), retrieving/accessing (for example, retrieving/accessing data in a memory), obtaining and the like. Also, " determine/determining" can include resolving, selecting, choosing, establishing, inferring and the like.

As used herein, a description of an action should also be considered to disclose enabling, and/or causing, and/or controlling that action. For example, a description of transmitting information should also be considered to disclose enabling, and/or causing, and/or controlling transmitting information. Similarly, for example, a description of an apparatus transmitting information should also be considered to disclose at least one means or controller of the apparatus enabling, and/or causing, and/or controlling the apparatus to transmit the information."

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example performing such functionality or functionalities may be caused in an apparatus by a processor that executes instructions stored in a memory of the apparatus.

References to a parameter (not least for example: position, positioning GT, or characteristic), or value of a parameter, should be understood to refer to "data indicative of", "data defining" or "data representative of" the relevant parameter/parameter value if not explicitly stated (unless the context demands otherwise). The data may be in any way indicative of the relevant parameter/parameter value, and may be directly or indirectly indicative thereof.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are used with an inclusive not an exclusive meaning and are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer any exclusive meaning. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described. In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art. Separate references to an "example", "in some examples" and/or the like in the description do not necessarily refer to the same example and are also not mutually exclusive unless so stated and/or except as will be readily apparent to those skilled in the art from the description. For instance, a feature, structure, process, block, step, action, or the like described in one example may also be included in other examples, but is not necessarily included.

Each and every claim is incorporated as further disclosure into the specification and the claims are embodiment(s) of the present disclosure. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. A first User Equipment, UE, comprising:
means for receiving, from a network node, information indicative of:
a request to determine information indicative of a position of a second UE based at least in part on a set of one or more characteristics of the second UE, wherein each characteristic of the set is a non-unique characteristic that more than one UE can have, and
the set of one or more characteristics of the second UE;
means for determining a set of one or more characteristics of a UE, wherein the determination is performed based at least in part on the received information;
means for performing a comparison of:
the determined set of one or more characteristics of the UE, with
the received set of one or more characteristics of the second UE;
means for determining a position of the UE, wherein the determination of the position is performed based at least in part on the comparison; and
means for sending, to the network node, information indicative of the position of the second UE, wherein the position of the second UE is defined as the position of the UE.

2. The first UE of claim 1, wherein the first UE is at least one of the following:
a Position Reference Unit, PRU;
a UE comprising means for sensing one or more characteristics of other UE; or
a UE comprising means for evaluating a position of other UE.

3. The first UE of claim 1 or 2, wherein the network node is at least one of the following:
a positioning server;
a Location Management Function, LMF; or
a UE.

4. The first UE of any previous claim, wherein determining the position of the UE is performed based on whether the determined set of one or more characteristics of the UE differs from the received set of one or more characteristics of the second UE by less than a threshold amount.

5. The first UE of any previous claim, wherein determining the position of the UE comprises at least one of the following:
determining the position of the UE using one or more sensors of the first UE;
determining an absolute position of the UE;
determining a position of the UE relative to the first UE;
determining a position of the first UE;
determining a distance and/or a direction of the UE from the first UE;
determining the position of the UE relative to a reference location;
determining a distance and/or a direction of the UE from a reference location; and
determining an indication of a level of accuracy of the position of the UE.

6. The first UE of any previous claim, wherein the received request comprises an indication of a geographic region, and wherein the first UE determines the set of one or more characteristics for one or more UE that are in the geographic region.

7. The first UE of any previous claim, wherein the received request comprises an indication of a reference position, and wherein the position of the UE is determined relative to the reference position.

8. The first UE of any previous claim, wherein the one or more characteristics characterise at least one of the following:
a mobility status,
a coarse location,
a location relative to a reference location,
an orientation relative to a reference orientation,
a type of UE,
a transmission beam,
a transmission carrier frequency,
a transmission Bandwidth Part, BWP,
a transmission radio resource,
a transmission data traffic,
an antenna, or
a transmission radio channel.

9. A network node comprising:
means for receiving, from a second User Equipment, UE, information indicative of:
a request to determine information indicative of a position of the second UE based at least in part on a set of one or more characteristics of the second UE, wherein each characteristic of the set of one or more characteristics is a non-unique characteristic that more than one UE can have, and
the set of one or more characteristics of the second UE;
means for sending, to a first UE, information indicative of the request and the set of one or more characteristics of the second UE;
means for receiving, from the first UE responsive to sending the request, information indicative of the position of the second UE; and
means for sending, to the second UE, the information indicative of the position of the second UE.

10. The network node of claim 9, wherein the network node is at least one of the following:
a positioning server;
a Location Management Function, LMF; or
a UE.

11. A method comprising:
receiving, at a first User Equipment, UE, from a network node, information indicative of:
a request to determine information indicative of a position of a second UE based at least in part on a set of one or more characteristics of the second UE, wherein each characteristic of the set is a non-unique characteristic that more than one UE can have, and
the set of one or more characteristics of the second UE;
determining a set of one or more characteristics of a UE, wherein the determination is performed based at least in part on the received information;
performing a comparison of:
the determined set of one or more characteristics of the UE, with
the received set of one or more characteristics of the second UE;
determining a position of the UE, wherein the determination of the position is performed based at least in part on the comparison; and
sending, to the network node, information indicative of the position of the second UE, wherein the position of the second UE is defined as the position of the UE.

12. The method of claim 11, wherein the first UE is at least one of the following:
a Position Reference Unit, PRU;
a UE comprising means for sensing one or more characteristics of other UE; or
a UE comprising means for evaluating a position of other UE, and/or wherein the network node is at least one of the following:
a positioning server,
a Location Management Function, LMF;
a UE.

13. The method of any of claims 11 to 12, wherein determining the position of the UE comprises at least one of the following:
determining the position of the UE using one or more sensors of the first UE;
determining an absolute position of the UE;
determining a position of the UE relative to the first UE;
determining a position of the first UE;
determining a distance and/or a direction of the UE from the first UE;
determining the position of the UE relative to a reference location;
determining a distance and/or a direction of the UE from a reference location; and
determining an indication of a level of accuracy of the position of the UE.

14. The method of any of claims 11 to 13, wherein the received request comprises an indication of a geographic region, and wherein the method further comprises determining the set of one or more characteristics for one or more UE that are in the geographic region.

15. The method of any of claims 11 to 14, wherein the received request comprises an indication of a reference position, and wherein determining the position of the UE comprises determining the position of the UE relative to the reference position.
